# FASCICULE DE BREVET EUROPEEN

(11) **EP 0 724 349 B1**
(45) Date de publication et mention de la délivrance du brevet: **31.03.2004**
(21) Numéro de dépôt: 96400135.8
(22) Date de dépôt: 19.01.1996
(51) Int. Cl.: H04M 3/36, H04M 3/42, H04M 3/22

(54) **Procédé et dispositif de transmission à distance d'une écoute parallèle sur une ligne téléphonique**
Verfahren und Gerät zur Fernübertragung eines paralellen Abhöranrufs auf einer Fernsprechleitung
Method and device for remote transmission of a listening-in call on a telephone line

(30) Priorité: 27.01.1995 FR 9500978
(43) Date de publication de la demande: 31.07.1996
(73) Titulaire: FRANCE TELECOM, 75015 Paris (FR)
(72) Inventeur: Junker, Christian, F-95170 Deuil la Barre (FR); Lemasson, Gilbert, F-75014 Paris (FR)
(74) Mandataire: Peaucelle, Chantal

(56) Documents cités:
- GB-A- 2 178 928
- US-A- 4 559 416
- US-A- 4 712 230
- US-A- 4 937 862
- US-A- 5 146 490
- BRITISH TELECOMMUNICATIONS ENGINEERING, vol. 8, no. 1, Avril 1989 LONDON GB, pages 2-5, M.J. JUPP 'MONOLOG-A SINGLE-LINE CALL LOGGING DEVICE'

## Description

La présente invention est relative à un procédé permettant de transmettre à distance des informations relatives à l'état d'une ligne téléphonique d'abonné sur laquelle doit être réalisée une écoute des conversations transitant sur celle-ci, afin notamment de détecter la séquence usuelle de sonnerie, décroché, conversation et raccroché dans un sens, de décroché, de numérotation, de conversation et de raccroché dans l'autre, aussi bien lors de la réception d'un appel émanant d'un tiers, ayant formé le numéro du poste du titulaire de la ligne, que de façon inverse d'un appel formé par ce dernier sur son propre poste.

L'invention concerne également un dispositif pour la mise en oeuvre de ce procédé.

La pratique des écoutes téléphoniques est soumise à une réglementation légale particulièrement stricte. Toutefois, dans le cadre de celle-ci, le nombre des lignes écoutées et la localisation des postes d'abonnés aboutissant à ces lignes, peuvent induire des difficultés pour gérer convenablement le trafic correspondant.

En particulier, dans les solutions actuelles, on utilise une valise d'écoute, apte à être branchée sur la ligne au plus près du poste à surveiller, notamment au droit de la barrette de distribution raccordant cette ligne à son câble de transmission, cette valise étant mise en oeuvre et contrôlée par la signalisation de la ligne elle-même.

Toutefois, l'écoute d'une ligne quelconque peut exiger un suivi de celle-ci de très longue durée, nécessitant un changement fréquent des cassettes enregistrant le trafic téléphonique, ce qui exige de regrouper les observations en un seul lieu où un opérateur peut mieux assurer les manipulations requises.

Néanmoins, si le (ou les) postes écoutés sont éloignés et que les retransmissions des signalisations qui y aboutissent sont impossibles dans des conditions satisfaisantes, les équipements habituels d'écoute ne peuvent plus être exploités convenablement.

Plus spécialement, les dispositifs actuels impliquent des réglages délicats pour déterminer le seuil à partir duquel la valise d'écoute est rendue opérationnelle, de même que pour ajuster la temporisation indispensable, en début, au cours et en fin d'enregistrement.

Ainsi, les appareils classiques peuvent être mis en route à partir d'informations représentant le bruit dans la ligne, en provoquant leur démarrage intempestif. Par ailleurs, l'enregistrement effectué est susceptible d'être coupé en cours de communication, consécutivement à un temps de silence important dans la conversation entre l'appelant et l'appelé. Enfin, il est possible que, à la fin de la communication, le bruit subsistant sur la ligne soit à lui seul suffisant pour laisser le dispositif enclenché alors qu'il devrait être au contraire mis hors service.

On connaît selon le document US-A-4 937 862 un procédé de transmission à distance d'une écoute effectuée sur une ligne téléphonique, dans lequel, les signaux représentatifs des divers états de la ligne, sonnerie, états décroché ou raccroché, numérotation ou transmission d'une communication entre deux intervenants, sont transformés au départ en signaux à fréquences vocales, transmis sous cette forme par une ligne d'observation montée en parallèle sur la ligne écoutée, puis retransformés à l'arrivée, afin de reconstituer à distance l'état initial de la ligne.

Le but de la présente invention est d'apporter des améliorations au procédé décrit dans le brevet US précité.

Suivant l'invention, ce procédé est caractérisé en ce qu'il permet de transformer la signalisation d'une ligne d'abonné, sur laquelle transitent des signaux continus, alternatifs et par impulsions, correspondant aux phases de sonnerie, de décroché de la ligne et de transfert d'une communication, en un ensemble de signaux à fréquence vocale, de manière à s'affranchir des effets du support de transmission utilisé, lequel n'est pas adapté à un transfert de tous les signaux représentatifs et en ce qu'il met en oeuvre un émetteur de signaux à fréquences vocales, représentatives de l'état de la ligne et superposées aux signaux issus d'un amplificateur à haute impédance.

L'invention concerne également un dispositif pour la mise en oeuvre du procédé selon l'invention qui comprend des moyens pour transformer les signaux représentatifs des divers états de la ligne, sonnerie, états décroché ou raccroché, numérotation ou transmission d'une communication entre deux intervenants en signaux à fréquences vocales, et pour les transmettre sous cette forme par une ligne d'observation montée en parallèle sur la ligne écoutée, puis pour les retransformer à l'arrivée, afin de reconstituer à distance l'état initial de la ligne.

Suivant l'invention, ce dispositif est caractérisé en ce qu'il comprend des moyens pour transformer la signalisation d'une ligne d'abonné, sur laquelle transitent des signaux continus, alternatifs et par impulsions, correspondant aux phases de sonnerie, de décroché de la ligne et de transfert d'une communication, en un ensemble de signaux à fréquence vocale, de manière à s'affranchir des effets du support de transmission utilisé, lequel n'est pas adapté à un transfert de tous les signaux représentatifs et un émetteur de signaux à fréquences vocales, représentatives de l'état de la ligne et superposés aux signaux issus d'un amplificateur à haute impédance, ledit amplificateur étant à gain réglable, monté en parallèle sur la ligne pour prélever les signaux de conversation circulant sur cette ligne entre un appelant et un appelé, à l'exclusion des signaux de sonnerie et adapté pour les retransmettre sur la ligne d'observation réunie à un poste d'écoute à distance.

De préférence également, le dispositif comporte, également monté en parallèle sur la ligne, un analyseur de la tension continue pour détecter des seuils correspondant respectivement à des états où la ligne est décrochée, raccrochée ou ouverte, un analyseur de la tension alternative pour détecter le courant alternatif de sonnerie, et le cas échéant un analyseur pour repérer les impulsions de tension continue transmises sur la ligne et représentant le numéro appelé en numérotation décimale. Selon une caractéristique particulière du dispositif considéré, l'analyseur de la tension continue, l'analyseur de la tension alternative et l'analyseur des impulsions de tension continue sont réunis à un circuit logique de contrôle, apte à commander un émetteur de signaux à fréquences vocales, représentatives de l'état de la ligne et superposées aux signaux issus de l'amplificateur à haute impédance.

Un amplificateur de sortie à basse impédance est monté sur la ligne d'observation et également réuni à un circuit logique de contrôle, lui-même monté en série avec un récepteur de fréquences vocales, de telle sorte que le signal délivré par l'amplificateur soit exactement reconstitué à l'identique du signal reçu de l'amplificateur à haute impédance, en direction du poste recevant ainsi à distance la conversation téléphonique établie sur la ligne écoutée.

Avantageusement, le circuit logique de contrôle réuni à l'amplificateur de sortie comporte un circuit d'affichage propre à fournir une indication visuelle sur la numérotation de la ligne écoutée.

Dans tous les cas, les signaux de numérotation et de conversation peuvent être transmis en fréquences vocales ou selon un codage dit DTMF (Dual Tone Modulation Frequency).

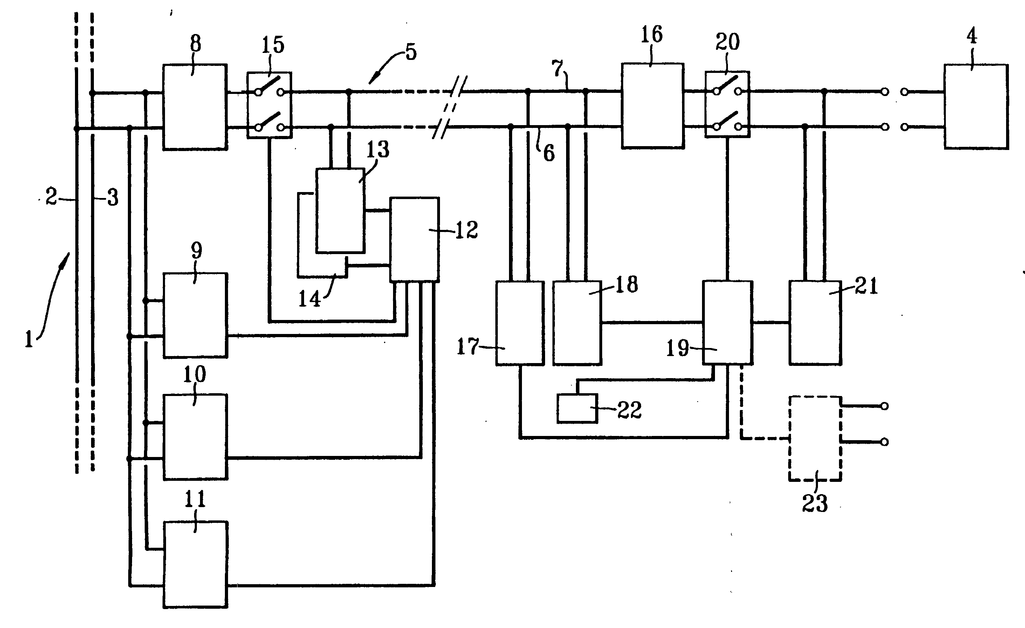

D'autres caractéristiques du procédé et du dispositif de transmission à distance d'une écoute parallèle sur une ligne téléphonique, apparaîtront encore à travers la description qui suit d'un exemple de réalisation, donné à titre indicatif et non limitatif, en référence au dessin annexé sur lequel la Figure unique est un schéma de principe du circuit permettant de transmettre la signalisation relative à une ligne écoutée vers un appareil d'écoute situé à distance, par l'intermédiaire d'une ligne d'observation.

Sur cette Figure, la référence 1 désigne une ligne d'abonné, comportant deux conducteurs parallèles, respectivement 2 et 3, cette ligne devant être mise en observation au moyen d'un appareillage d'écoute et d'enregistrement 4, dont le détail de la réalisation n'importe pas directement en lui-même à l'invention.

L'appareillage 4 peut être aménagé de manière à pouvoir surveiller en permanence une ou plusieurs lignes distinctes, telles que la ligne 1 représentée, lesquelles peuvent être situées à des distances notables et en des lieux diversifiés, de telle sorte qu'il est indispensable de les relier individuellement à l'appareillage 4 en question, chacune par une ligne d'observation 5, comportant elle-même deux conducteurs, respectivement 6 et 7, réunis en parallèle sur les conducteurs 2 et 3 de la ligne observée, à placer en écoute. A noter que la ligne d'observation peut être pour partie une fibre optique, une voie de transmission MIC, ou tout autre support numérisé.

Or, si les signaux de conversation sur la ligne 1, formés notamment par modulation du courant, peuvent être aisément transférés sur la ligne d'observation 5 jusqu'à l'appareillage d'écoute 4, il en va différemment de la signalisation, permettant de connaître l'état de la ligne 1 et notamment le déroulement de la séquence dont elle est le siège, lorsque le titulaire de cette ligne appelle un tiers ou est appelé par ce dernier.

Notamment, il n'est pas possible de connaître de manière précise le moment où l'utilisateur décroche son poste, formule un numéro d'appel avec identification de ce dernier, en particulier lorsqu'il est réalisé en numérotation décimale, entre en conversation, puis raccroche son poste à la fin de cette dernière, ou bien en sens inverse, de détecter une sonnerie d'appel par un tiers, le décroché du poste, la conversation et finalement le raccroché.

Le dispositif selon l'invention permet de pallier cet inconvénient.

A cet effet, il comporte, montés en parallèle sur les conducteurs 2 et 3 de la ligne 1, un amplificateur à haute impédance et à gain régable 8, permettant de laisser passer et de transmettre sur la ligne d'observation 5 les impulsions de courant représentant la conversation écoutée, un analyseur 9 en haute impédance de la tension continue sur la ligne 1, permettant de détecter trois seuils de tension différents selon que la ligne 1 est raccrochée, décrochée ou ouverte, un analyseur 10 de la tension alternative, également en haute impédance, pour détecter le courant de sonnerie dans la ligne et un analyseur 11, permettant de reconnaître la numérotation décimale formée sur le clavier (non représenté) du poste du titulaire de la ligne 1, lorsque celui-ci ne fournit pas directement une numérotation en fréquence vocale ou du type DTMF.

Les analyseurs 9, 10 et 11 sont raccordés à un circuit logique de contrôle 12 qui, en fonction des informations reçues et de leur chronologie, pilote d'une part un émetteur 13 de fréquences vocales, ou encore à un émetteur 14 d'impulsions DTMF, et d'autre part un dispositif électromécanique du genre relais qui connecte l'amplificateur à haute impédance 8 sur la ligne d'observation ou isole cette dernière.

A l'opposé de la ligne 5, le dispositif comporte un amplificateur de sortie à gain réglable et à basse impédance 16, qui délivre vers l'appareillage 4 les signaux de conversation reçus sur la ligne 5. En outre, en parallèle sur cette dernière, sont montés, un récepteur 17 de fréquences vocales, un récepteur de la numérotation DTMF éventuelle et un circuit logique de contrôle 19, connecté à ces récepteurs et qui pilote un dispositif électromécanique 20 fermant la ligne sur l'appareillage 4.

Simultanément, le circuit logique 19 déclenche un module de signalisation 21 qui recrée à l'identique la signalisation de la ligne 1, notamment en ce qui concerne le signal de sonnerie et les niveaux de tension continue correspondant à l'état décroché ou raccroché de cette ligne. Un afficheur 22 permet de connaître le numéro appelé par l'utilisateur de la ligne 1. La référence 23 désigne sur le schéma un dispositif de réception d'informations complémentaires.

Le dispositif selon l'invention fonctionne de la manière suivante, selon que la ligne 1 est le siège d'une communication provenant d'un tiers ou d'un appel émanant du poste raccordé à cette ligne.

Dans le premier cas, dès la détection d'un appel arrivant sur la ligne 1, le dispositif génère, à l'arrivée de chaque début d'un train de sonnerie, une information en fréquence vocale sur la ligne d'observation 5. A l'arrivée, le dispositif recrée l'équivalent de ce train vers l'appareillage d'utilisation.

Si l'utilisateur décroche sa ligne, la variation de tension continue correspondante est détectée par l'analyseur 9 et, par l'intermédiaire du circuit logique 12 et de l'émetteur 13 ou 14, provoque l'envoi d'une signalisation sur la ligne 5, en fréquences vocales ou en code DTMF. Le circuit logique 19 de réception détermine le même changement de tension vers l'appareillage 4.

Au raccroché, la même séquence est mise en oeuvre, avec toutefois une séquence en fréquences vocales ou DTMF sur la ligne 5, qui peut être différente, pour ne pas créer une confusion avec la transmission des signaux représentant la numérotation.

Lors d'une communication au départ du poste du titulaire sur la ligne 1, l'état de décroché ou de raccroché de ce poste sont transmis de la même manière. Les signaux de conversation, après traversée de l'amplificateur d'entrée 8, passent sur la ligne 5, puis sont retransmis vers l'appareillage 4 après traversée de l'amplificateur de sortie 16.

A noter que si dans la séquence de chiffres correspondant à la numérotation, interviennent ceux qui représentent l'envoi d'un train de sonnerie, cette situation n'a pas d'incidence puisque le dispositif est alors déjà dans la situation où le poste est indiqué décroché.

Si le dispositif est connecté sur la ligne 1 lorsque celle-ci est ouverte, il envoie sur la ligne d'observation 5 un signal régulièrement répété, permettant de vérifier la connexion ; en revanche, si le dispositif est normalement relié, le signal reçu est différent et peut être écarté par les circuits logiques qui ne le prennent pas en compte dans ce cas.

On réalise ainsi un dispositif de conception simple, qui permet, conformément au procédé de l'invention, d'intercepter et de retransmettre à distance la situation d'une ligne téléphonique observée, tous les signaux représentatifs de l'état de la ligne étant, au départ, transformés ou codés en fréquences vocales puis, à l'arrivée, décodés pour retrouver leur état initial et fournir à l'appareillage de contrôle et d'enregistrement une indication fidèle de la ligne écoutée.

## Revendications

1. Procédé de transmission à distance d'une écoute effectuée sur une ligne téléphonique, dans lequel, les signaux représentatifs des divers états de la ligne (1): sonnerie, états décroché ou raccroché, numérotation ou transmission d'une communication entre deux intervenants, sont transformés au départ en signaux à fréquences vocales, transmis sous cette forme par une ligne d'observation montée en parallèle sur la ligne écoutée, puis retransformés à l'arrivée, afin de reconstituer à distance l'état initial de la ligne, ledit procédé étant **caractérisé en ce qu'**il permet de transformer la signalisation d'une ligne d'abonné, sur laquelle transitent des signaux continus, alternatifs et par impulsions, correspondant aux phases de sonnerie, de décroché de la ligne et de transfert d'une communication, en un ensemble de signaux à fréquence vocale, de manière à s'affranchir des effets du support de transmission utilisé, lequel n'est pas adapté à un transfert de tous les signaux représentatifs et **en ce qu'**il met en oeuvre un émetteur de signaux à fréquences vocales, représentatives de l'état de la ligne et superposées aux signaux issus d'un amplificateur à haute impédance.

2. Dispositif pour la mise en oeuvre d'un procédé de transmission à distance d'une écoute effectuée sur une ligne téléphonique selon la revendication 1, comprenant des moyens pour transformer les signaux représentatifs des divers états de la ligne (1), sonnerie, états décroché ou raccroché, numérotation ou transmission d'une communication entre deux intervenants en signaux à fréquences vocales, et pour les transmettre sous cette forme par une ligne d'observation montée en parallèle sur la ligne écoutée, puis pour les retransformer à l'arrivée, afin de reconstituer à distance l'état initial de la ligne, ledit dispositif étant **caractérisé en ce qu'**il comprend des moyens pour transformer la signalisation d'une ligne d'abonné, sur laquelle transitent des signaux continus, alternatifs et par impulsions, correspondant aux phases de sonnerie, de décroché de la ligne et de transfert d'une communication, en un ensemble de signaux à fréquence vocale, de manière à s'affranchir des effets du support de transmission utilisé, lequel n'est pas adapté à un transfert de tous les signaux représentatifs et un émetteur de signaux à fréquences vocales, représentatives de l'état de la ligne et superposés aux signaux issus d'un amplificateur à haute impédance (8), ledit amplificateur (8) étant à gain réglable, monté en parallèle sur la ligne (1) pour prélever les signaux de conversation circulant sur cette ligne entre un appelant et un appelé, à l'exclusion des signaux de sonnerie et adapté pour les retransmettre sur la ligne d'observation (5) réunie à un poste d'écoute à distance (4).

3. Dispositif selon la revendication 2, **caractérisé en ce qu'**il comporte, également monté en parallèle sur la ligne (1), un analyseur de la tension continue (9) pour détecter des seuils correspondant respectivement à des états où la ligne est décrochée, raccrochée ou ouverte, un analyseur de la tension alternative (10) pour détecter le courant alternatif de sonnerie, et le cas échéant un analyseur (11) pour repérer les impulsions de tension continue transmises sur la ligne et représentant le numéro appelé en numérotation décimale.

4. Dispositif selon la revendication 3, **caractérisé en ce que** l'analyseur de la tension continue (9), l'analyseur de la tension alternative (10) et l'analyseur des impulsions de tension continue sont réunis à un circuit logique de contrôle (12), apte à commander un émetteur de signaux (13) à fréquences vocales, représentatives de l'état de la ligne et superposées aux signaux issus de l'amplificateur à haute impédance (8).

5. Dispositif selon l'une quelconque des revendications 2 à 4, **caractérisé en ce qu'**un amplificateur (16) de sortie à basse impédance est monté sur la ligne d'observation et également réuni à un circuit logique de contrôle (19), lui-même monté en série avec un récepteur de fréquences vocales (17), de telle sorte que le signal délivré par l'amplificateur soit exactement reconstitué à l'identique du signal reçu de l'amplificateur à haute impédance (8), en direction du poste (4) recevant ainsi à distance la conversation téléphonique établie sur la ligne écoutée.

6. Dispositif selon la revendication 5, **caractérisé en ce que** le circuit logique de contrôle (19) réuni à l'amplificateur (16) de sortie comporte un circuit d'affichage (22), propre à fournir une indication visuelle sur la numérotation de la ligne écoutée.

7. Dispositif selon l'une quelconque des revendications 2 à 6, **caractérisé en ce que** les signaux de numérotation et de conversation sont transmis en fréquences vocales ou selon un codage dit DTMF (Dual Tone Modulation Frequency).

## Patentansprüche

1. Verfahren zur Fernübertragung eines Abhöranrufs auf einer Fernsprechleitung, worin die für die verschiedenen Zustände der Leitung (1) repräsentativen Signale: Rufsignale, abgenommener oder aufgelegter Zustand, Nummerung oder Übermittlung einer Kommunikation zwischen zwei Teilnehmern zu Beginn in Tonfrequenzsignale umgewandelt werden, in dieser Form durch eine zur abgehörten Leitung parallele Abhörleitung übermittelt werden, dann beim Eintreffen rückgewandelt werden, um in der Entfernung den ursprünglichen Zustand der Leitung wieder herzustellen, wobei das Verfahren **dadurch gekennzeichnet ist, daß** es die Umformung der Signalgebung einer Teilnehmerleitung ermöglicht, auf der kontinuierliche, abwechselnde und Impulssignale laufen, die Phasen des Rufens, Abhebens der Leitung und der Übermittlung einer Kommunikation entsprechen, in einer Anordnung von Tonfrequenzsignalen ermöglicht, um sich von den Effekten des gewählten Übertragungsträgers zu befreien, der nicht angepaßt ist an eine Übermittlung aller repräsentativer Signale, und dadurch, daß ein Sender von Tonfrequenzsignalen benutzt wird, die repräsentativ für den Zustand der Leitung sind und den von einem Verstärker mit hoher Impedanz ausgesandten Signalen überlagert werden.

2. Vorrichtung zur Durchführung eines Verfahrens zur Femübertragung eines Abhöranrufs auf einer Fernsprechleitung nach Anspruch 1 mit Mitteln zum Umwandeln der für die verschiedenen Zustände der Leitung (1) repräsentativen Signale, Rufen, abgenommener oder wiederaufgelegter Zustand, Nummerung oder Übertragung einer Kommunikation zwischen zwei Teilnehmern in Tonfrequenzsignale und zum Übermitteln derselben in dieser Form durch eine zur abgehörten Leitung parallele Abhörleitung, dann zum Rückwandeln derselben beim Eintreffen, um in der Entfernung den ursprünglichen Zustand der Leitung wiederherzustellen, wobei die Vorrichtung **dadurch gekennzeichnet ist, daß** sie Mittel aufweist, um die Signalisierung einer Teilnehmerleitung, auf der kontinuierliche, abwechselnde und Impulssignale laufen, die den Phasen des Rufens, des Abhebens und der Übertragung einer Kommunikation entsprechen, in eine Anordnung von Tonfrequenzsignalen umzuwandeln, um sich so von den Wirkungen des verwendeten Übertragungsträgers zu lösen, der nicht für eine Übermittlung aller repräsentativer Signale geeignet ist, und einen Sender von Tonfrequenzsignalen aufweist, die repräsentativ für den Zustand der Leitung sind und den von einem Verstärker mit hoher Impedanz (8) ausgesandten Signalen überlagert werden, wobei der Verstärker (8) einen regelbaren Verstärkungsfaktor hat und parallel zur Leitung (1) geschaltet ist, um unter Ausschluß von Rufsignalen die Signale des auf dieser Leitung zwischen einem Anrufer und einem Angerufenen laufenden Gesprächs abzunehmen, und dafür geeignet ist, sie an die Abhörleitung (5) rückzuübertragen, die mit einer Fernabhörstation (4) verbunden ist.

3. Vorrichtung nach Anspruch 2, **dadurch gekennzeichnet, daß** sie ebenfalls in Parallelschaltung zur Leitung (1) einen Analysator der Gleichspannung (9) aufweist, um Schwellen zu detektieren, die jeweils den Zuständen entsprechen, wo die Leitung abgehoben, wiederaufgelegt oder offen ist, sowie einen Analysator, der Wechselspannung (10), um den Wechselstrom des Rufens zu detektieren und gegebenenfalls einen Analysator (11) um die Gleichspannungsimpulse aufzuzeigen, die auf der Leitung übertragen werden und die angerufene Nummer in Dezimalnummerung repräsentieren.

4. Vorrichtung nach Anspruch 3, **dadurch gekennzeichnet, daß** der Analysator der Gleichspannung (9), der Analysator der Wechselspannung (10) und der Analysator der Impulse der Gleichspannung mit einer Steuerungslogikschaltung (12) verbunden sind, welche geeignet ist, einen Sender (13) von Tonfrequenzsignalen zu steuern, die für den Zustand der Leitung repräsentativ sind und den vom Verstärker mit hoher Impedanz (8) ausgesandten Signalen überlagert werden.

5. Vorrichtung nach einem der Ansprüche 2 bis 4, **dadurch gekennzeichnet, daß** ein Ausgangsverstärker (16) mit niedriger Impedanz an die Beobachtungsleitung geschaltet und ebenfalls mit einer Steuerungslogikschaltung (19) verbunden ist, die selbst in Reihe mit einem Tonfrequenzempfänger (17) geschaltet ist, so daß das vom Verstärker abgegebene Signal exakt identisch mit dem vom Verstärker mit hoher Impedanz (8) empfangenen Signal wiederhergestellt wird in Richtung auf die Station (4), die so in der Entfernung das auf der abgehörten Leitung gerührte Telefongespräch empfängt.

6. Vorrichtung nach Anspruch 5, **dadurch gekennzeichnet, daß** die mit dem Ausgangsverstärker (16) verbundene Steuerungslogikschaltung (19) eine Anzeigeschaltung (22) aufweist, die geeignet ist, eine visuelle Anzeige der Nummerung der abgehörten Leitung zu liefern.

7. Vorrichtung nach einem der Ansprüche 2 bis 6, **dadurch gekennzeichnet, daß** die Signale der Nummerung und des Gesprächs in Tonfrequenzen oder gemäß einer sogenannten DTMF-Kodierung (Dual Tone Modulation Frequency) übermittelt werden.

## Claims

1. Process for remote transmission of a tapping carried out on a telephone line, in which the signals which are representative of the various states of the line (1): ringing, off-hooked or on-hooked states, dialling or transmission of a communication between two participants, are transformed initially into voice-frequency signals, transmitted in this form via an observation line connected in parallel to the line being tapped, then re-transformed upon arrival, in order to remotely reconstitute the initial state of the line, the said process being **characterized in that** it allows the transformation of the signalling of a subscriber line, on which continuous, alternating and pulsed signals travel, corresponding to the phases of ringing, off-hooking the line and transferring a communication, into a set of voice-frequency signals, in order to dispense with the effects of the transmission medium used which is not suitable for transferring all the representative signals, and **in that** it uses a transmitter of voice-frequency signals which are representative of the state of the line and are superimposed on the signals originating from a high-impedance amplifier.

2. Device for the implementation of a process for remote transmission of a tapping carried out on a telephone line according to claim 1, comprising means for transforming signals which are representative of the various states of the line (1), ringing, off-hooked or on-hooked states, dialling or transmission of a communication between two participants into voice-frequency signals, and for transmitting them in this form via an observation line connected in parallel to the line being tapped, then for re-transforming them upon arrival, in order to remotely reconstitute the initial state of the line, the said device being **characterized in that** it comprises means for transforming the signalling of a subscriber line, along which continuous, alternating and pulsed signals travel, corresponding to the phases of ringing, off-hooking the line and transferring a communication, into a set of voice-frequency signals, in order to dispense with the effects of the transmission medium used which is not suitable for transferring all the representative signals, and a transmitter of voice-frequency signals which are representative of the state of the line and are superimposed on the signals originating from a high-impedance amplifier (8), the said amplifier (8) being of variable gain, connected in parallel to the line (1) in order to extract the conversation signals travelling along this line between a person calling and a person being called, to the exclusion of ringing signals and suitable for relaying them along an observation line (5) connected to a remote tapping device (4).

3. Device according to claim 2, **characterized in that** it contains, also connected in parallel to the line (1), a direct-current analyzer (9) for detecting thresholds corresponding respectively to states in which the line is off-hooked, on-hooked or open, an alternating-current analyzer (10) for detecting the alternating current of ringing, and if appropriate an analyzer (11) for locating direct-current pulses transmitted along the line and representing the number called using pulse dialling.

4. Device according to claim 3, **characterized in that** the direct-current analyzer (9), the alternating-current analyzer (10) and the direct-current pulse analyzer are connected to a control logic circuit (12) which is able to command a transmitter of voice-frequency signals (13) which are representative of the state of the line and are superimposed on the signals originating from the high-impedance amplifier (8).

5. Device according to any one of claims 2 to 4, **characterized in that** a low-impedance output amplifier (16) is connected to the observation line and also connected to a control logic circuit (19), itself connected in series to a voice-frequency receiver (17), such that the signal emitted by the amplifier is exactly reconstituted to be identical to the signal received by the high-impedance amplifier (8), in the direction of the device (4) thus remotely receiving the telephone conversation established on the line being tapped.

6. Device according to claim 5, **characterized in that** the control logic circuit (19) connected to the output amplifier (16) contains a display circuit (22) suitable for providing a visual indication of the dialling of the line being tapped.

7. Device according to any one of claims 2 to 6, **characterized in that** the dialling and conversation signals are transmitted in the form of voice frequencies or according to an encoding known as DTMF (Dual Tone Modulation Frequency).
